# EUROPEAN PATENT SPECIFICATION

(11) **EP 3 318 616 B1**
(45) Date of publication and mention of the grant of the patent: **29.04.2020**
(21) Application number: 17198340.6
(22) Date of filing: 25.10.2017
(51) Int. Cl.: C09K 8/80, C09D 175/04

(54) **REDUCING EROSION OF OIL FIELD PUMPING AND TRANSFER EQUIPMENT**
REDUZIERUNG DER EROSION VON ÖLFELDPUMP- UND -TRANSPORTAUSRÜSTUNG
RÉDUCTION DE L'ÉROSION DE POMPAGE DE CHAMP DE PÉTROLE ET ÉQUIPEMENT DE TRANSFERT

(30) Priority: 02.11.2016 US 201662416342 P; 19.05.2017 LU 100250
(43) Date of publication of application: 09.05.2018
(73) Proprietor: Covestro LLC, Pittsburgh, PA 15205 (US)
(72) Inventor: ZIELINSKI, David, Cranberry Township, Pennsylvania 16066 (US); CONNOR, Mark, Kempton, Pennsylvania 19529 (US); BLANCHARD, William, Wexford, Pennsylvania 15090 (US); SMITH, Natalee, Pittsburgh, Pennsylvania 15212 (US)
(74) Representative: Levpat

(56) References cited:
- WO-A1-2006/096687
- WO-A1-2016/112013
- JP-A- 2012 057 025
- KR-B1- 100 665 882
- US-A1- 2014 131 041

## Description

### CROSS REFERENCE TO RELATED APPLICATION(S)

This Application claims the benefit of the filing date of U.S. Provisional Application Serial Number 62/416,342, filed November 2, 2016.

### FIELD OF THE INVENTION

The present invention relates in general to a method of reducing erosion in oil and gas production and more specifically to a method of reducing erosion in using a resin-containing dispersion coating for proppants which reduces erosion of pumping and transfer equipment used to process the proppant in slurries.

### BACKGROUND OF THE INVENTION

Hydraulic fracturing (or fracing) is one of the most complex oilfield services employed today, requiring equipment to transport and store water and chemicals, prepare the fracturing fluid, blend the fluid with proppant, pump the fluid down the well and monitor the treatment.

Coating of hydraulic fracturing sand is not new. Millions of tons of sand or proppant are used in the oil and gas industry every year to stimulate wells and thereby improve productivity. Such sand may be coated to impart specialized functionality when in use in the down-hole environment. The sand "props open" the fractures in the well so that fluids and gas can escape more efficiently. The typical sand coating is either heat or chemically activated so that the sand will "stick" to itself forming a discrete "pack" or sponge-like formation with open pathways for the fluid and gas to escape. After the well is depleted, the sand pack can be "broken" or dissolved so the sand can flow back out of the well and be recovered. Uncoated sand remains, however, the largest percentage of fracing sand used in the industry.

In most instances, at the surface, fracturing fluid and proppant are mixed on the low pressure side of a positive displacement pump, which is used to push the mixed fluid (slurry) into the formation at a high pressure. Prior to the use of horizontal well multi-stage fracturing technology, a conventional fractured well may have required a few fracturing stages at 50 barrels per minute ("BPM" / 1 BPM = 159 L/min) or less, with surface pumping pressure of up to 10,000 psi (68.95 MPa) and in some instances up to 15,000 psi (103.42 MPa).

Maintenance programs and their frequency for fracturing pumps have increased significantly with shale oil/gas development where horizontal well multi-stage fracturing technology is applied. Each fracturing stage commonly requires pumping at a combined fluid and proppant rate (slurry rate) of up to 50 BPM, and often at rates greater than 50 BPM, such as up to 100 BPM, although sometimes the slurry rate is as low as 1 BPM. Also, there may be numerous distinct fracturing intervals within the wellbores, such as up to or even in excess of 30 "stages" per well.

This demand on fracture treatment equipment at a high rate and high pressure for hours to stimulate a shale oil or gas reservoir creates substantial operating costs, stress, and wear on hydraulic fracturing equipment and pumps, especially when pumping abrasive proppant-laden slurries through the pumps, lines, valves, and other surface equipment. The rate of wear on such equipment on such jobs can frequently necessitate repair and maintenance of pumps and other equipment to be performed on the well location, instead of the preferred locale of a workshop. In some cases, it may be more economical to simply replace the worn pumps and other equipment rather than attempt repairs. Consequently, delays, costs, personnel time are compromised and cannot be efficiently and wholly directed only to the objective of fracturing the geologic formations.

Therefore, the art needs new formulations, methods, and systems for reducing the abrasive effect of proppant slurries on pumps and proppant transfer equipment.

### SUMMARY OF THE INVENTION

Accordingly, the present invention provides a method of reducing erosion and wear on pumping an transfer equipment according to claim 1. Various embodiments of the present disclosure provide a proppant coating comprising a resin-containing dispersion and a glycol or cosolvent. Various non-limiting embodiments of this disclosure provide methods of preparing a proppant by applying a coating of a resin-containing dispersion containing a glycol or cosolvent. Other embodiments of this disclosure provide a fracing fluid comprising a proppant at least partially coated with a composition comprising a resin-containing dispersion and a glycol or cosolvent. Various non-limiting embodiments of this disclosure also provide a proppant slurry comprising a plurality of proppant particles coated with a composition comprising a resin-containing dispersion and a glycol or cosolvent which are suspended in a carrier fluid. Some embodiments of this disclosure provide a method of forming a proppant slurry comprising suspending a plurality of proppant particles at least partially coated with a composition comprising a resin-containing dispersion and a glycol or cosolvent in a carrier fluid to form a suspension (slurry). Various non-limiting embodiments of this disclosure provide a method of hydraulically fracturing a geologic formation comprising, introducing a slurry of a plurality of proppant particles in a carrier fluid into fissures in the formation wherein the proppant particles are coated with a composition comprising a resin-containing and a glycol or cosolvent.

It is understood that the invention disclosed and described in this specification is not limited to the embodiments summarized in this Summary.

### BRIEF DESCRIPTION OF THE FIGURE

The present invention will now be described for purposes of illustration and not limitation in conjunction with the figure, wherein:

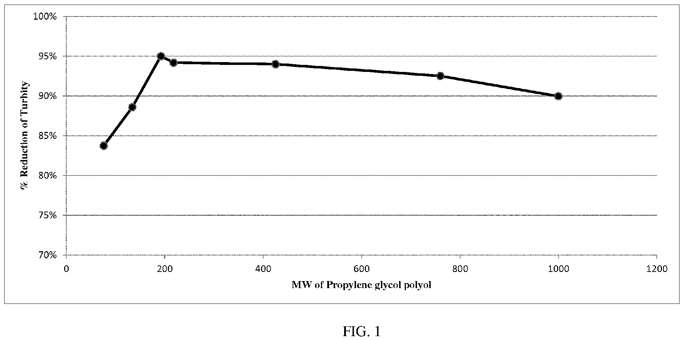

FIG. 1 shows the turbidity reduction of DISPERSION A using various propylene glycol (PPG) polyols in conjunction with SURFACTANT A.

### DETAILED DESCRIPTION OF THE INVENTION

The present invention will now be described for purposes of illustration and not limitation. Except in the operating examples, or where otherwise indicated, all numbers expressing quantities, percentages, hydroxyl numbers, functionalities and so forth in the specification are to be understood as being modified in all instances by the term "about." Equivalent weights and molecular weights given herein in Daltons (Da) are number average equivalent weights and number average molecular weights, respectively, unless indicated otherwise.

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In some embodiments, the present disclosure is directed to methods for preparing those dispersion-coated proppants, and methods for reducing the abrasive effects on pumping and transfer equipment through the use of those proppants. Resin-containing dispersion-coated proppants of the present disclosure have been found to significantly reduce erosion during handling and transport operations. This improves the ease of handling the proppants prior to and during their use. For example, these coated proppants do not need to be transported to a well site in slurry or suspension form, but can be distributed in bulk quantities as free-flowing solids.

To define more clearly the terms and concepts disclosed herein, the following definitions are provided. To the extent that any definition or usage provided by any document cited herein conflicts with the definition or usage provided herein, the definition or usage provided herein controls.

The terms "particle", "particulate", "particulate material" and the like, when unmodified, are used herein to indicate the base material which, when coated, forms a "proppant." For example, hydraulic fracturing ("fracing") sand is a material that is often referred to in the art as a "proppant", but in this disclosure, it is referred to as a "particle." The terms "proppant", "proppant particle", "coated proppant", and the like, are reserved for resin-containing dispersion-coated particles in accordance with the teachings of this invention.

The term "free-flowing" is used herein to mean that the particles do not agglomerate appreciably, and generally remain as discrete, individual proppant particles. Coated particles of the present invention are "free-flowing" at ambient conditions, i.e., at a temperature of about 20-25°C and at atmospheric pressure.

The flowability of the solid particles can be measured using a test method such as the American Foundrymen's Society Procedure 227-87-S, entitled "Moldability of Molding Sand Mixtures" as found in the Mold & Core Test Handbook, 2nd edition (1989). Briefly, the test procedure involves placing a 200 g sample of solid particles in a cylindrical 8-mesh screen of a rotary screen device driven by a 57 rpm motor. The screen was rotated for 10 sec. In accordance with this test, the moldability index is equal to the weight of the product passing through the screen divided by the original weight charged to the screen chamber (i.e., 200g). If all of the material passes through the screen, the moldability index is 100%.

In accordance with the present invention, free-flowing proppants have a moldability index of greater than about 80% at ambient conditions. For instance, the proppants disclosed herein can have a moldability index greater than about 85%, or greater than about 90%. In some aspects of this invention, the coated proppants have a moldability index of greater than about 95%, or alternatively, greater than about 98%. Generally, solid materials that are not free-flowing have a moldability index of less than about 50%. Such materials can, in some cases, have a moldability index of less than about 40%, or less than about 25%.

Although any methods, devices, and materials similar or equivalent to those described herein can be used in the practice or testing of the invention, the typical methods, devices and materials are herein described.

Although compositions and methods are described in terms of "comprising" various components or steps, the compositions and methods can also "consist essentially of' or "consist of' the various components or steps.

Various embodiments of the present disclosure are directed to resin-containing dispersion-coated particles, methods for preparing the coated particles, and methods for using these particles, for example, to reduce erosion on pumping and transport equipment in the oil and gas industry. A coated proppant in accordance with one aspect of the present disclosure comprises (i) a particle, and (ii) a resin-containing dispersion-coating covering at least a portion of the particle.

The resin-containing dispersion coated particles of certain embodiments of the present disclosure can be prepared by any of a variety of processes, including batch, semi-continuous, or continuous processes. Batch, continuous mixers or in-line where the sand is effectively agitated sufficient to spread coating onto the sand surface may be used to prepare the coated particles of some embodiments of the disclosure. Suitable methods of coating the particles include, but are not limited to, spraying, slurrying, flooding, and simply adding solution to bulk proppant and stirring. Application temperatures may be from about 4.4°C (40°F) - the coating solution must be flowable but protected from freezing - up to temperatures as high as approximately 232.22°C (450°F). At temperatures above 100°C (212°F), i.e., the boiling point of water, the required contact time of the solution should be limited due to the rapid evolution of water from the mixture. At lower application temperatures, the coated particle mixture requires longer drying times or the addition of heat to speed the drying process.

In addition to the pumping and transport equipment, there are several application points in a sand processing plant, including a wash step, drying step, during other transport processes or in-line or off-line with an additional mixing step where the present invention may find applicability. A separate coating process of the sand may occur at an off-site location. In the case of coating done separately from the sand manufacturing, any of several batch or continuous coating methods may be employed, including those used to prepare resin-containing dispersion coated proppant designed for flowback control, for example. Large scale mixers may be used. In some embodiments of this disclosure the most preferred location for coating is at the site of the sand processing, either in-line with the sand processing flow or nearby so as to minimize the handling and transport of large quantities of sand and adding additional cost. Suitable process equipment for coating the sand includes, but is not limited to, twin screw mixers, fluidized beds, modified single screw mixers, batch tanks with mixing blades, and single or multiple head sprayers.

The present invention is not limited to any specific type of particulate material for use as the proppant substrate (before providing the particle or particulate with the coating containing a resin-containing dispersion material in accordance with the present invention), so long as the particle has sufficient strength to withstand the stresses, such as elevated temperature and pressure, often encountered in oil and gas recovery applications.

In various embodiments of the present invention, the particle of the coated proppant may comprise a sand, a naturally occurring mineral fiber, a ceramic, a bauxite, a glass, a metal bead, a walnut hull, a composite particle, and the like. For example, the sand can be graded sand or a resin-coated sand. Such resin-coated sands may include sand particles coated with a curable thermosetting resin, for example, as described in U.S. Pat. No. 5,837,656. These resin-coated sands can serve as particles in the present invention.

A ceramic can include both porous and non-porous ceramic materials, and a bauxite can include sintered bauxite materials. Composite particles are an agglomeration of smaller, fine particles held together by a binder, and such composite particles can be the particulate material in the present invention. Compositions containing coated proppants can employ mixtures or combinations of more than one type of particle; for instance, both a sand and a ceramic can be coated and then mixed to form a composition of coated proppants.

It is contemplated that any particulate material suitable for use in proppant applications can be used in the present invention, regardless of the specific gravity of the particle, although it can be beneficial in certain applications to have a lower specific gravity to increase the distance that the proppants can be carried into a formation prior to settling.

In various embodiments of the invention, the particle is either a porous ceramic or porous polymer particle. Such particles are described in, for example, U.S. Pat. Nos. 7,426,961 and 7,713,918. These porous ceramic or porous polymer materials can be of natural origin or can be produced synthetically. Although the use of such materials is not limited by specific gravity, the specific gravity of these materials is generally less than 3 g/cc, or less than 2.7 g/cc. In another aspect, the specific gravity of the porous particle is less than 2.5 g/cc, for example, less than 2.2 g/cc.

The particle size of the particle used to produce the coated proppant of the present disclosure generally falls within a range from 100 µm to 3000 µm (3 mm). In another aspect, the particle size is from 125 µm to 2500 µm, from 150 µm to 2000 µm, or from 175 µm to 1500 µm. Yet, in another aspect, the particle of the coated proppant of the present invention has a particle size that falls within a narrower range of about 200 µm to about 1000 µm, for example, 250 µm to 800 µm, or from 300 µm to 700 µm.

In certain embodiments of the invention, the particles have a mesh size from 8 and 100, based on the U.S. Standard Sieve Series. For example, in a distribution of such particles which can be added to a treating fluid for use in a subterranean formation, at least 90% by weight of the particles have a particle size falling within the range from 8 to 100 mesh. In accordance with another aspect of the present invention, at least 95% by weight of the particles in a resin-containing dispersion-coated proppant composition have a size within the range from 8 to 100 mesh. Further, 90% by weight or more (e.g., 95% or more) of the particles in a resin-containing dispersion-coated proppant composition can have a size within the 20 to 40 mesh range in another aspect of this invention.

In other embodiments of the invention, the particle in the resin-containing dispersion-coated proppant has a size in the range from 8 to 140 mesh, from 10 to 120 mesh, from 10 to 100 mesh, or from 14 to 80 mesh. In other aspects of this invention, the particle is in a range from 18 to 60 mesh, or from 20 mesh to 40 mesh. In another aspect, there is less than 10% by weight, for example, 5% by weight of less, of particles in a coated proppant composition having a size of less than 20 mesh or greater than 50 mesh.

The proppants of the present disclosure comprise particles which are not limited to any particular material or size. The coated particles described herein can be used in a variety of applications including, for example, use as a component of a coating, adhesive, or sealant composition, in which the coated particles are dispersed in a binder resin, such as any binder resin known to those skilled in the art of such compositions.

In certain embodiments, however, the coated particles of the present disclosure are thought to be particularly suitable in hydraulic fracturing of a geologic formation. In these embodiments, the coated particles may be combined with a carrier fluid, such as water and/or a hydrocarbon, to form a slurry and the mixture (slurry) injected at elevated pressure into a well bore to an underground geologic formation. As the pressure in the formation resulting from the injection exceeds the strength of the formation, a fracture is formed and the coated particles, i.e., proppant, are placed in the formation to maintain the fracture in a propped open position as the injection pressure is released. Upon ceasing the injection of fluid, it is desired that the proppant forms a pack that serves to hold open the fractures, thereby providing a highly conductive channel through which a desired material, such as water, oil, or gas (including natural gas) can flow to the well bore for retrieval.

In various embodiments, therefore, the coated particles are used in a method of forming a proppant composition that includes suspending the coated particles described herein in a carrier fluid to form a suspension and injecting the suspension into an underground geologic formation. The inventive suspended, coated particles reduce the abrasive effects of the proppant, compared to uncoated proppants, on the pumping and transfer equipment.

The coated particles described herein can be injected as the sole proppant or as a partial replacement for existing proppant(s). For example, if desired, the coated particles described herein may comprise 1 to 99 percent by weight, such as 10 to 90 percent by weight, or, in some cases, 10 to 50 percent by weight, based on the total weight of the proppant present in the composition that is injected into the well bore. In some embodiments, an uncoated proppant is first placed in a well, and thereafter a proppant of the coated particles described herein is placed in the fracture nearest to the wellbore or fracture openings.

The resin-containing dispersion-coated particles of the present disclosure are presently thought to provide several advantages, particularly in hydraulic fracturing processes. For example, the coated particles tend to appreciably reduce the abrasion and wear on metal parts used in the processing and on the proppant pumping equipment, as well reducing wear on the equipment used in transporting the particles to the drilling site. As an added benefit, the coated particles may reduce dust formation from handling the particles.

As used herein, the term "coating" refers to a set of chemical components that may be mixed to form an active coating composition that may be applied and cured to form a coating. As used herein, the term "coating composition" refers to a mixture of chemical components that will dry by eliminating water and/or cosolvent. Accordingly, a coating composition may be formed from a coating system by mixing the chemical components comprising the coating system. Furthermore, when a list of constituents is provided herein that are individually suitable for forming the components of the coating system or coating composition discussed herein, it should be understood that various combinations of two or more of those constituents, combined in a manner that would be known to those of ordinary skill in the art reading the present specification, may be employed and is contemplated.

As used herein, the term "polyurethane" refers to polymeric or oligomeric materials comprising urethane groups, urea groups, or both. Accordingly, as used herein, the term "polyurethane" is synonymous with the terms polyurea, poly(urethane/urea), and modifications thereof. The term "polyurethane" also refers to crosslinked polymer networks in which the crosslinks comprise urethane and/or urea linkages, and/or the constituent polymer chains comprise urethane and/or urea linkages. Carbodiimide crosslinking as is known to those skilled in the art is also contemplated in the coated proppants of the invention.

As used herein, the term "dispersion" refers to a composition comprising a discontinuous phase distributed throughout a continuous phase. For example, "waterborne dispersion" and "aqueous dispersion" refer to compositions comprising particles or solutes distributed throughout liquid water. Waterborne dispersions and aqueous dispersions may also include one or more cosolvents in addition to the particles or solutes and water. As used herein, the term "dispersion" includes, for example, colloids, emulsions, suspensions, sols, solutions (i.e., molecular or ionic dispersions), and the like.

As those skilled in the art are aware, higher coat weights may reduce metal wear, but can be prohibitively expensive unless also providing additional high value function in the well. In various embodiments, the resin-containing dispersions in the present invention may be applied at 0.01 wt.% to 2.0 wt.% resin solids based on the weight of the proppant, in other embodiments 0.01 to 0.5 wt.%, and in certain embodiments, 0.01 wt.% to 0.2 wt.%. Exemplary polyurethane dispersions may be obtained from Covestro under the BAYHYDROL, DISPERCOLL AND IMPRANIL trademarks.

As used herein, the term "polyisocyanate" refers to compounds comprising at least two free isocyanate groups. Polyisocyanates include diisocyanates and diisocyanate reaction products comprising, for example, biuret, isocyanurate, uretdione, urethane, urea, iminooxadiazine dione, oxadiazine trione, carbodiimide, acyl urea, and/or allophanate groups.

As used herein, the term "polyol" refers to compounds comprising at least two free hydroxy groups. Polyols include polymers comprising pendant and/or terminal hydroxy groups. As used herein, the term "polyamine" refers to compounds comprising at least two free amine groups. Polyamines include polymer comprising pendant and/or terminal amine groups.

Water-dispersible polyisocyanates include polyisocyanates that may form an aqueous dispersion with the aid of organic cosolvents, protective colloids, and/or external emulsifiers under high shear conditions. Water-dispersible polyisocyanates also include polyisocyanates that are hydrophilically-modified with covalently linked internal emulsifiers.

The polyisocyanate may comprise any organic polyisocyanates having aliphatically, cycloaliphatically, araliphatically, and/or aromatically bound free isocyanate groups, which are liquid at room temperature or are dispersed in a solvent or solvent mixture at room temperature. In various embodiments, the polyisocyanate may have a viscosity of from 10-15000 mPa·s at 23°C, 10-5000 mPa·s at 23°C, or 50-1000 mPa·s at 23°C. In various embodiments, the polyisocyanate may comprise polyisocyanates or polyisocyanate mixtures having exclusively aliphatically and/or cycloaliphatically bound isocyanate groups with an (average) NCO functionality of 2.0-5.0 and a viscosity of from 10-5000 mPa·s at 23°C, 50-1000 mPa·s at 23°C, or 100-1000 mPa·s at 23°C.

In various embodiments, the polyisocyanate may comprise polyisocyanates or polyisocyanate mixtures based on one or more aliphatic or cycloaliphatic diisocyanates, such as, for example, ethylene diisocyanate; 1,4-tetramethylene diisocyanate; 1,6-hexamethylene diisocyanate (HDI); 2,2,4-trimethyl-1,6-hexamethylene diisocyanate; 1,12-dodecamethylene diisocyanate; 1-isocyanato-3-isocyanatomethyl-3,5,5-trimethyl-cyclohexane (isophorone diisocyanate or IPDI); m-xylylene diisocyanate (XDI), bis-(4-isocyanatocyclohexyl)methane (H₁₂MDI); cyclohexane 1,4-diisocyanate; bis-(4-isocyanato-3-methyl-cyclohexyl)methane; PDI (pentane diisocyanate - bio-based) isomers of any thereof; or combinations of any thereof. In various embodiments, the polyisocyanate component may comprise polyisocyanates or polyisocyanate mixtures based on one or more aromatic diisocyanates, such as, for example, benzene diisocyanate; toluene diisocyanate (TDI); diphenylmethane diisocyanate (MDI); isomers of any thereof; or combinations of any thereof. In various embodiments, the polyisocyanate component may comprise a triisocyanate, such as, for example, 4-isocyanatomethyl-1,8-octane diisocyanate (triisocyanatononane or TIN); isomers thereof; or derivatives thereof.

Additional polyisocyanates (including various diisocyanates) that may also find utility in the polyurethane coating useful in the present invention may include the polyisocyanates described in U.S. Pat. Nos. 5,075,370; 5,304,400; 5,252,696; 5,750,613; and 7,205,356. Combinations of any of the above-identified and incorporated polyisocyanates may also be used to form a polyurethane dispersion useful herein.

The di- and tri-isocyanates indicated may be used as such, or as derivative polyisocyanates comprising biuret, isocyanurate, uretdione, urethane, urea, iminooxadiazine dione, oxadiazine trione, carbodiimide, acyl urea, and/or allophanate groups. In various embodiments, derivative polyisocyanates comprising biuret, isocyanurate, uretdione, urethane, iminooxadiazine dione, oxadiazine trione, carbodiimide, acyl urea, and/or allophanate groups are included in the polyisocyanate coating. In various embodiments, the polyisocyanate component comprises one or more of the above-identified structural groups prepared from IPDI, HDI, H₁₂MDI, and/or cyclohexane 1,4-diisocyanate.

The polyisocyanate may be hydrophilically-modified to be water-dispersible. Hydrophilically-modified water-dispersible polyisocyanates are obtainable, for example, by covalent modification with an internal emulsifier comprising anionic, cationic, or nonionic groups.

Polyether urethane type water-dispersible polyisocyanates may be formed, for example, from a reaction between polyisocyanates and less than stoichiometric amounts of monohydric polyalkylene oxide polyether alcohols. The preparation of such hydrophilically-modified polyisocyanates is described, for example, in U.S. Pat. No. 5,252,696. Polyether allophanate type water-dispersible polyisocyanates may be formed, for example, from a reaction between a polyalkylene oxide polyether alcohol and two polyisocyanate molecules under allophanation conditions. The preparation of such hydrophilically-modified polyisocyanates is described, for example, in U.S. Pat. No. 6,426,414. The polyalkylene oxide polyether alcohol used to prepare polyether type hydrophilically-modified water-dispersible polyisocyanates may comprise, for example, polyethylene oxide residues and/or polypropylene oxide residues.

Polyisocyanates may also be covalently modified with ionic or potentially ionic internal emulsifying groups to form hydrophilically-modified water-dispersible polyisocyanates. The ionic or potentially ionic groups may be cationic or anionic. As used herein, the term "ionic or potentially ionic group" refers to a chemical group that is nonionic under certain conditions and ionic under certain other conditions. For example, in various embodiments, the ionic group or potentially ionic group may comprise a carboxylic acid group; a carboxylate group; a sulfonic acid group; a sulfonate group; a phosphonic acid group; a phosphonate group; or combinations of any thereof. In this regard, for example, carboxylic acid groups, sulfonic acid groups, and phosphonic acid groups are potentially ionic groups, whereas, carboxylate groups, sulfonate groups, and phosphonate groups are ionic groups in the form of a salt, such as, for example, a sodium salt.

For example, carboxylate (carboxylic acid) groups, sulfonate (sulfonic acid) groups, or phosphonate (phosphonic acid) groups may be covalently introduced into polyisocyanates to form hydrophilically-modified water-dispersible polyisocyanates. The ionic or potentially ionic groups may be introduced through a reaction between the isocyanate groups of the polyisocyanate and less than stoichiometric amounts of amino-functional or hydroxy-functional carboxylic acids, sulfonic acids, phosphonic acids, or salts thereof. Examples include, but are not limited to dimethylolpropionic acid (DMPA), N-(2-aminoethyl)-2-aminoethane sulfonic acid (AAS); N-(2-aminoethyl)-2-aminopropionic acid; 2-(cyclohexyl-amino)-ethane sulfonic acid; 3-(cyclohexyl-amino)-1-propane sulfonic acid (CAPS); 2-aminoethylphosphonic acid; or the salts thereof.

If free carboxylic acids, sulfonic acids, or phosphonic acids are incorporated in the polyisocyanate, then the acids may be neutralized with a neutralizing agent, such as, for example, tertiary amines, including, but not limited to, trialkyl-substituted tertiary amines. The preparation of hydrophilically-modified water-dispersible polyisocyanates is described, for example, in U.S. Pat. No. 6,767,958. Water-dispersible polyisocyanate mixtures based on triisocyanatononane (TIN) are described in WO2001/062819.

The NCO content of nonionic type hydrophilically-modified water-dispersible polyisocyanates may be from 5 to 25 weight percent of the polyisocyanate molecule. The NCO content of ionic type hydrophilically-modified water-dispersible polyisocyanates may be from 4 to 26 weight percent of the polyisocyanate molecule.

The polyisocyanates may also be partially blocked with compounds that are reversibly reactive with isocyanate groups. Suitable blocking agents for polyisocyanates include, for example, monohydric alcohols such as methanol, ethanol, butanol, hexanol, cyclohexanol, benzyl alcohol, oximes such as acetoxime, methyl ethyl ketoxime, cyclohexanone oxime, lactams such as ε-caprolactam, phenols, amines such as diisopropylamine or dibutylamine, dimethylpyrazole or triazole, as well as malonic acid dimethyl ester, malonic acid diethyl ester or malonic acid dibutyl ester.

The present inventors have unexpectedly found that the addition of glycols, such as ethylene glycol, propylene glycol, 1,3-butanediol, and 1,4-butanediol, to the resin-containing dispersion based coatings are especially helpful in reducing abrasion on pump and transfer equipment. Particularly preferred are propylene glycols within a molecular weight range of 130 Da to 1000 Da.

Other suitable agents for addition to the resin-containing dispersion based coating in reducing abrasion include cosolvents such as N-methyl-2-pyrrolidone, propylene carbonate, ethylene oxide-based and/or propylene oxide-based glycol ether solvents, including ethylene glycol monohexyl ether, diethylene glycol monomethyl ether, diethylene glycol monoethyl ether, diethylene glycol monopropyl ether, diethylene glycol monobutyl ether (CARBITOL), ethylene glycol monobutyl ether acetate, diethylene glycol monoethyl ether acetate, dipropylene glycol n-butyl ether, including mixtures of two or more thereof.

In addition to the resin-containing dispersion and glycols or cosolvents, the coating composition may include any desired additives or auxiliaries. Suitable additives and auxiliaries include, but are not limited to, fillers, wetting agents, thickeners, fungicides, biocides, surfactants, and colorants.

Although primarily exemplified herein in connection with polyurethane dispersions and blends containing polyurethane dispersions, the invention is not intended to be so limited. The present invention encompasses acrylate dispersions and styrene butadiene rubber ("SBR") latex dispersions as the resin-containing dispersion, either alone or in combination with one or more polyurethane dispersions.

The resin-containing dispersion-coated proppants of the present disclosure may be added to a fracing fluid to create a slurry which is introduced into the downhole formation via a pump. Fracing fluids are known in the art and depending on the particular application, known fracing fluids may contain water and different types of additives, e.g., including hydrochloric acid, friction reducers, guar gum, biocides, emulsion breakers, and emulsifiers. Exemplary fracing fluids may be found in U.S. Pat. Nos. 8,215,164; 8,273,320 and 8,568,573.

The pump used to move the dispersion-coated proppant slurry may be a high pressure pump in some embodiments. As used herein, the term "high pressure pump" means a pump that is capable of delivering a fluid downhole at a pressure of about 1000 psi (6.89 MPa) or greater. A high pressure pump may be used when it is desired to introduce the proppant containing slurry to a subterranean formation at or above a fracture gradient of the subterranean formation, but it may also be used in cases where fracturing is not desired. In some embodiments, the high pressure pump may be capable of fluidly conveying particulate matter, such as the dispersion-coated proppant described in some embodiments herein, into the subterranean formation. Suitable high pressure pumps will be known to one having ordinary skill in the art and may include, but are not limited to, floating piston pumps and positive displacement pumps.

In various embodiments, the pump may be a low pressure pump. As used herein, the term "low pressure pump" means a pump that operates at a pressure of 1000 psi (6.89 MPa) or less. In some embodiments, the low pressure pump may be configured to convey the proppant containing slurry to the high pressure pump. In such embodiments, the low pressure pump may "step up" the pressure of the treatment fluids before reaching the high pressure pump.

In certain embodiments, the systems described herein can further comprise a mixing tank that is upstream of the pump and in which the slurries are formulated. In various embodiments, the pump (e.g., a low pressure pump, a high pressure pump, or a combination thereof) may convey the slurry from the mixing tank or other source to the well. In other embodiments, however, the slurries may be formulated offsite and transported to a worksite, in which case the slurry may be introduced to the well via the pump directly from its shipping container (e.g., a truck, a railcar, a barge, or the like) or from a transport pipeline. In either case, the slurry may be drawn into the pump, elevated to an appropriate pressure, and then introduced for delivery downhole.

It should be noted that the invention is not meant to have an impact on well productivity. It is primarily aimed at reducing the erosive effects of proppant slurries on pumping and transfer equipment during the handling and transport of proppant slurries.

### EXAMPLES

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

The following materials were used in making the compositions of the Examples:
- DISPERSION A: an anionic aliphatic polyester-polyurethane dispersion, having a solids content of approx.. 35%, commercially available from Covestro as IMPRANIL DL 2409;
- DISPERSION B: an aqueous aliphatic polyurethane dispersion that contains only 5% by weight of organic cosolvent and includes about 35 wt. % solids, commercially available from Covestro as BAYHYDROL PR 435;
- DISPERSION C: an aliphatic, polycarbonate-containing anionic polyurethane dispersion, commercially available from Covestro as BAYHYDROL XP 2606;
- DISPERSION D: an anionic aliphatic polyester-polyurethane dispersion, solids content of approx. 60%, commercially available from Covestro as IMPRANIL DL 1537;
- DISPERSION E: an anionic aliphatic polyetherurethane dispersion, solids content of approx. 30%, commercially available from Covestro as IMPRANIL 43032;
- DISPERSION F: an anionic dispersion of an aliphatic polyester urethane resin in water/n-methyl-2-pyrrolidone, solids content of approx. 35%, commercially available from Covestro as BAYHYDROL 110;
- DISPERSION G: a linear aliphatic polyester urethane based on hexamethylene diisocyanate (HDI) and isophorone diisocyanate (IPDI) in aqueous dispersion, solids content of approx. 40%, commercially available from Covestro as DISPERCOLL U 53;
- DISPERSION H: an aliphatic, anionic/non-ionic polyester-polyurethane dispersion, solids content of approx. 50%, commercially available from Covestro as BAYHYDROL UH 2305;
- DISPERSION I: an anionic aliphatic polyester-polyurethane dispersion, solids content of approx. 40%, commercially available from Covestro as IMPRANIL DLH;
- DISPERSION J: an anionic aliphatic polyether/polycarbonate polyurethane dispersion in water, 60% by weight non-volatile content, commercially available from Covestro as IMPRANIL DLU;
- DISPERSION K: an anionic aliphatic polyester-polyurethane dispersion, solids content of approx. 40%, commercially available from Covestro as IMPRANIL XP 2611;
- DISPERSION L: an aliphatic polyester-polyurethane dispersion that is cosolvent-free, solids content of approx. 40%, commercially available from Covestro as BAYHYDROL UH XP 2660;
- POLYOL A: propylene glycol (PPG), molecular weight 76 Da;
- POLYOL B: dipropylene glycol (DPG), molecular weight 134 Da;
- POLYOL C: tripropylene glycol (TPG), molecular weight 192 Da;
- POLYOL D: a polypropylene oxide-based diol; hydroxyl number 495-535 mg KOH/g; molecular weight of 218 Da, specific gravity at 25°C of 1.02, commercially available from Covestro LLC as MULTRANOL 9198;
- POLYOL E: a polypropylene glycol having a functionality of 2; hydroxyl number 263 mg KOH/g; molecular weight 426 Da; viscosity 70 cps @ 25°C, commercially available from Covestro as ARCOL PPG 425;
- POLYOL F: a polypropylene glycol having a functionality of 2; hydroxyl number 147 mg KOH/g; molecular weight 763 Da; viscosity 125 cps @ 25°C, commercially available from Covestro as ARCOL PPG 725;
- POLYOL G: a polypropylene oxide-based diol; having a molecular weight of 1,000 Da, a hydroxyl number of 107.4-115.4 mg KOH/g; viscosity 155 cps @ 25°C, commercially available from Covestro as ARCOL PPG 1025;
- SURFACTANT A: a solution of a polyether modified siloxane, commercially available as BYK-346 from BYK Chemie;
- SAND A: 20/40 mesh (420 µm - 840 µm) from Chippewa Sand Company, New Auburn, WI;
- SAND B: 20/40 mesh (420 µm - 840 µm) from Unimin Corp. New Canaan, CT;
- SAND C: 40/70 mesh (212 µm - 420 µm) frac sand from Unimin Corp. New Canaan, CT.

### Example 1

Table I provides the formulations of Examples 1-A to 1-M. The coatings were applied at 0.05% wt. solids, based on the weight of the dispersion. Turbidity measurements were made of these formulations and are reported in Table I as follows: sand was coated with the formulation and sent to an external testing lab. The turbidity of the water was measured using a turbidimeter for a turbidity rating in NTU units according to ASTM D7726.

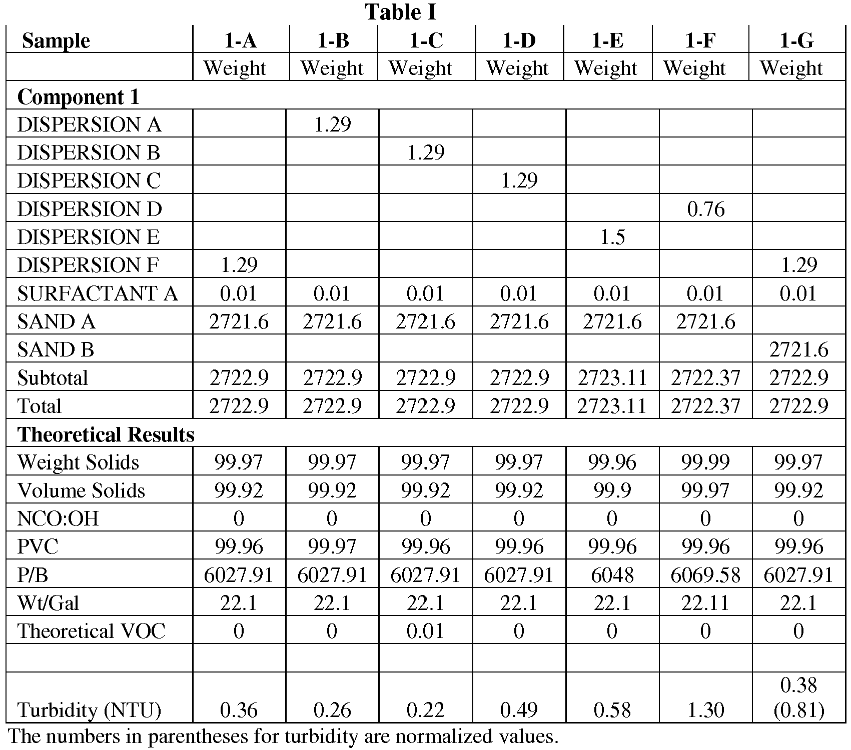

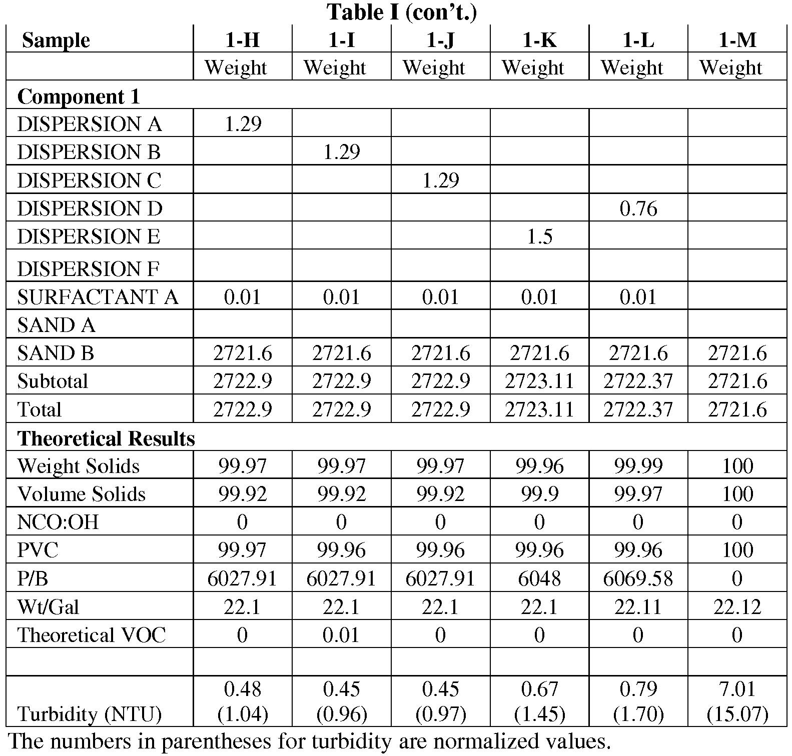

As can be appreciated by reference to Table I, DISPERSION D (an anionic aliphatic polyester-polyurethane dispersion, solids content of approx. 60%,) appears to be somewhat less effective at reducing turbidity than the other dispersions when used on either of two commercially available sands. Although DISPERSION D resulted in lower turbidity than the Control (SAMPLE I-M) with either of two commercially available sand samples.

### Example 2

Table II provides the formulations of Examples 2-A to 2-T.

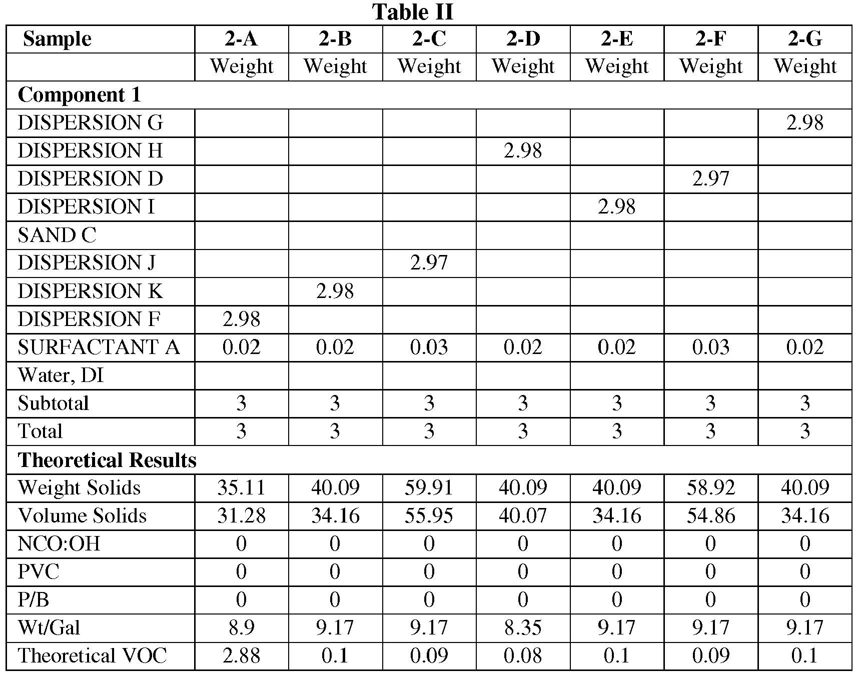

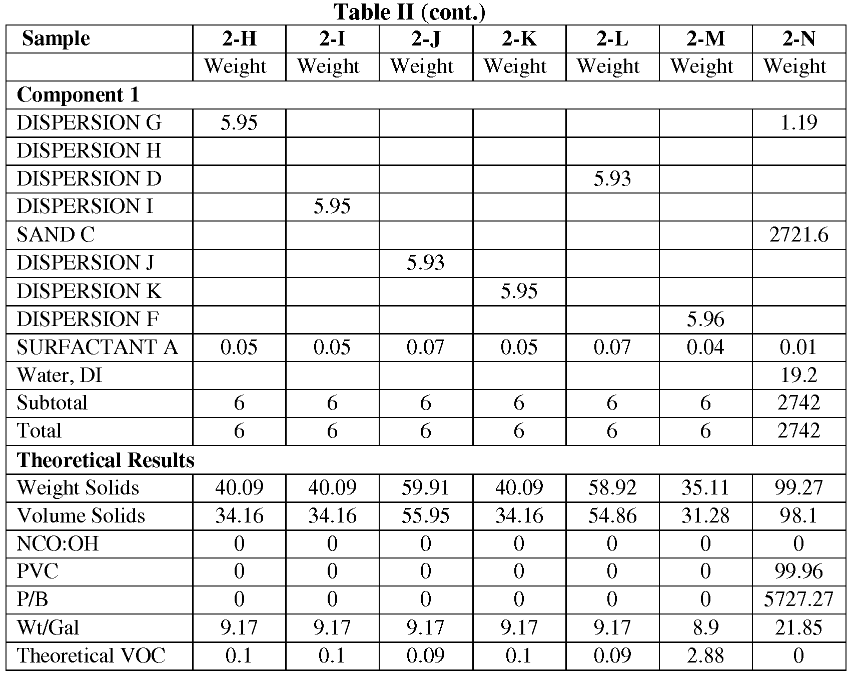

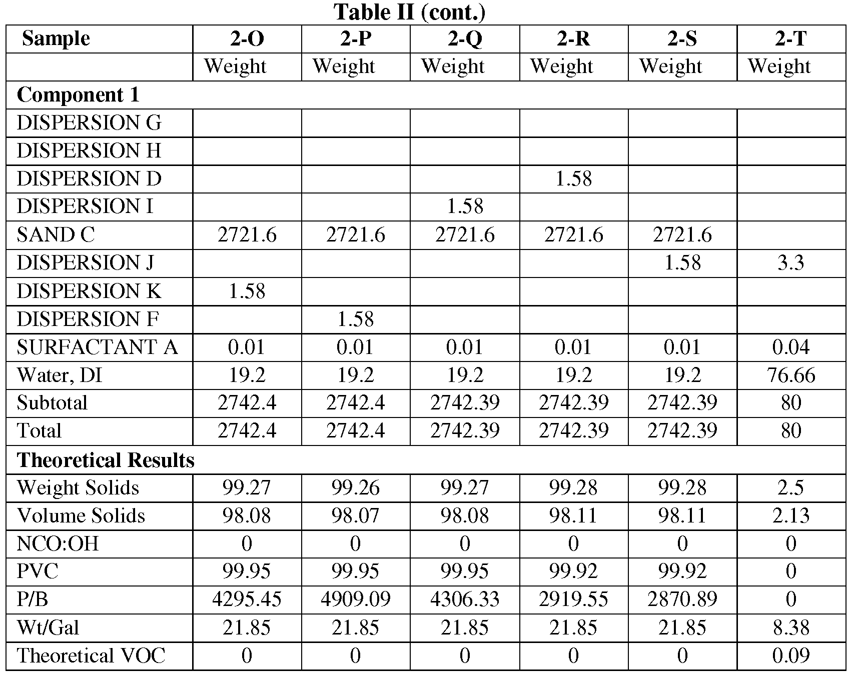

### Example 3

Table III provides the formulations of Examples 3-A to 3-D. Turbidity measurements were made of these formulations and are reported in Table III. 300g of SAND C was heated to 66°C (150°F) and coated with 6.0g of solution at 2.5% solids, based on the weight of the dispersion. It was stirred using a KITCHEN AID Mixer for -25-40 minutes (until dry) and left to sit overnight. For "abuse" testing, the entire sample was placed into a one-quart container and shaken using a paint shaker for 1 minute. Turbidity samples were prepared using API method (20g sand + 100g water were stirred with magnetic stir bar for 30 seconds and allowed to sit for five minutes. 25 mL of this material was placed into an eight dram vial for turbidity measurement and sent to an external testing lab (MicroTrac, Montgomeryville, PA). The turbidity of the water was measured using a turbidimeter for a turbidity rating in NTU units according to ASTM D7726.

**Table III**

| | **3-A** | **3-B** | **3-C** | **3-D** |
|---|---|---|---|---|
| **Component 1** | | | | |
| DISPERSION A | 7.08 | 7.08 | | |
| POLYOL D | 1.10 | 1.10 | | |
| SURFACTANT A | 0.04 | 0.04 | | |
| Water, DI | 91.78 | 91.78 | 100.00 | 100.00 |
| NCO:OH | 0 | 0 | 0 | 0 |
| P/B | 0 | 0 | 0 | 0 |
| PVC | 0 | 0 | 0 | 0 |
| VOC | 0.05 | 0.05 | 0 | 0 |
| Volume Solids | 3.07 | 3.07 | 0.00 | 0.00 |
| Weight Solids | 3.60 | 3.60 | 0.00 | 0.00 |
| Wt/Gal | 8.40 | 8.40 | 8.35 | 8.35 |

| **Turbidity** | | | | |
|---|---|---|---|---|
| Trial 1 | 0.377 | 0.484 | 8.44 | 12.14 |
| Trial 2 | 0.386 | 0.499 | 8.57 | 11.82 |
| Average | 0.382 | 0.492 | 8.51 | 11.98 |

Samples 3-A and 3-B were coated using the formulation as is and then tested again after abuse to determine effectiveness under stress. Samples 3-C and 3-D were uncoated controls. Samples 3-A and 3C were initial and Samples 3-B and 3-D were after abuse. As can be appreciated by reference to Table III, the turbidity results were measurably higher for the abused samples.

### Example 4

SAND C was coated at 150°F (66°C); with a 0.05% DISPERSION A loading; 2.5% solids stock solution of the respective POLYOL listed in Table III with 1% SURFACTANT A and allowed to dry as unconsolidated particles. A quantity of coated, loose sand was then placed in a jar with a quantity of water and agitated to allow the water to remove any dust from the sand particles. The dust was visible as turbidity in the water. The turbidity of the water was measured using a turbidimeter for a turbidity rating in NTU units according to ASTM D7726 and the results are reported in Table IV.

**Table IV**

| | **Turbidity (NTU) API Test** | **Avg. turbidity** | **% reduction in turbidity** |
|---|---|---|---|
| NO DISPERSION | 12.9, 12.6 | 12.8 | |
| DISPERSION A | 4.03, 4.76 | 4.4 | 66% |
| DISPERSION A + POLYOL A | 1.28, 2.50, 2.48 | 2.08 | 84% |
| DISPERSION A + POLYOL B | 2.58, 1.01, 0.794 | 1.46 | 89% |
| DISPERSION A + POLYOL C | 0.740, 0.591 | 0.67 | 95% |
| DISPERSION A + POLYOL D | 0.887, 0.603 | 0.75 | 94% |
| DISPERSION A + POLYOL E | 0.738, 0.788 | 0.76 | 94% |
| DISPERSION A + POLYOL F | 0.905, 1.01 | 0.96 | 93% |
| DISPERSION A + POLYOL G | 1.42, 1.15 | 1.29 | 90% |

Table V summarizes the percent reduction in turbidity for each of the propylene glycol (PPG) which were used in the examples of Table IV. FIG. 1 shows the same data graphically. As can be appreciated by reference to Table V and FIG. 1, there appears to be a "sweet spot" in the molecular weight of the PPG (∼200 Da) above and below which there is a drop-off in performance as measured by turbidity reduction.

**Table V**

| **POLYOL** | **PPG MW (Da)** | **% reduction in turbidity** |
|---|---|---|
| **A** | 76.1 | 84% |
| **B** | 134.2 | 89% |
| **C** | 192.3 | 95% |
| **D** | 218 | 94% |
| **E** | 425 | 94% |
| **F** | 760 | 93% |
| **G** | 1000 | 90% |

As those skilled in the art are aware, the Miller Number is an index of the relative abrasiveness of slurries and may be used to arrange the abrasivity of slurries in terms of the wear of a standard reference material. The wear damage on the standard wear block increases as the Miller Number increases.

The SAR Number is an index of the relative abrasion response of materials as tested in any particular slurry of interest. The SAR Number is a generalized form of the Miller Number applicable to materials other than the reference material used for the Miller Number determination and it is used to rank materials for use in a system for pumping and fluid handling equipment for a particular slurry. It can also be used to rank the abrasivity of various slurries against any selected material other than the reference material specified for a Miller Number determination. The slurry damage on the specimen of material being tested is worse as the SAR Number increases. Miller and SAR numbers are determined according to ASTM G 75.

As those skilled in the art are further aware, slurries having a Miller or SAR Number of approximately 50 or lower can be pumped with minor abrasive damage to the system. With slurries having a number above 50, precautions must be observed as greater damage from abrasion is to be expected. Accordingly, the Miller Number and the SAR Number provide information about the slurry or the material that may be useful determine the abrasive effect of coated proppants on pumps and other equipment and to predict the life expectancy of liquid-end parts of the pumps involved.

### Example 5

An analysis of one of the polyols (POLYOL D) around the "sweet spot" of PPG molecular weight (~200 Da) and having the greatest reduction in turbidity was undertaken to determine the effect on erosion of pumps used to pump proppant slurries in the oil and gas industry by measuring the Miller Number. The formulations detailed in Table VI were prepared.

**Table VI**

| | **5-A** | **5-B** | **5-C** | **5-D** | **5-E** | **5-F** |
|---|---|---|---|---|---|---|
| | Weight | Weight | Weight | Weight | Weight | Weight |
| **Component 1** | | | | | | |
| DISPERSION A | 0 | 0 | 7.09 | 7.09 | 28.37 | 28.37 |
| POLYOL D | 0 | 0 | 1.09 | 1.09 | 4.37 | 4.37 |
| SURFACTANT A | 0 | 0 | 0.07 | 0.07 | 0.27 | 0.27 |
| Water, DI | 100 | 100 | 91.75 | 91.75 | 66.99 | 66.99 |
| Total | 100 | 100 | 100 | 100 | 100 | 100 |

| **Theoretical Results** | | | | | | |
|---|---|---|---|---|---|---|
| Weight Solids | 0.00 | 0.00 | 3.61 | 3.61 | 14.44 | 14.44 |
| Volume Solids | 0.00 | 0.00 | 3.08 | 3.08 | 12.52 | 12.52 |
| NCO:OH | 0 | 0 | 0 | 0 | 0 | 0 |
| PVC | 0 | 0 | 0 | 0 | 0 | 0 |
| P/B | 0 | 0 | 0 | 0 | 0 | 0 |
| Wt/Gal | 8.35 | 8.35 | 8.40 | 8.40 | 8.54 | 8.54 |
| Theoretical VOC | 0 | 0 | 0.09 | 0.09 | 0.09 | 0.09 |

Samples of SAND C were coated with Composition 5-C from Table VI and submitted to White Rock Engineering, Frisco, Texas for erosion resistance testing according to ASTM G 75. Samples 6-A and 6-B were uncoated controls, Samples 6-C and 6-D were coated at 0.05% dry coating on sand weight, and Samples 6-E and 6-F were coated at 0.2% dry coating on sand weight. The testing was performed in both dry and wet modes. The results of that testing are provided in Table VII. As can be appreciated by reference to Table VII below, a reduction was seen in Miller and SAR numbers by the addition of either 0.05% or 0.2% of the resin-containing dispersion with PPG from approximately 100 to below 50, which is indicative of less damage to equipment from contact with the coated proppants.

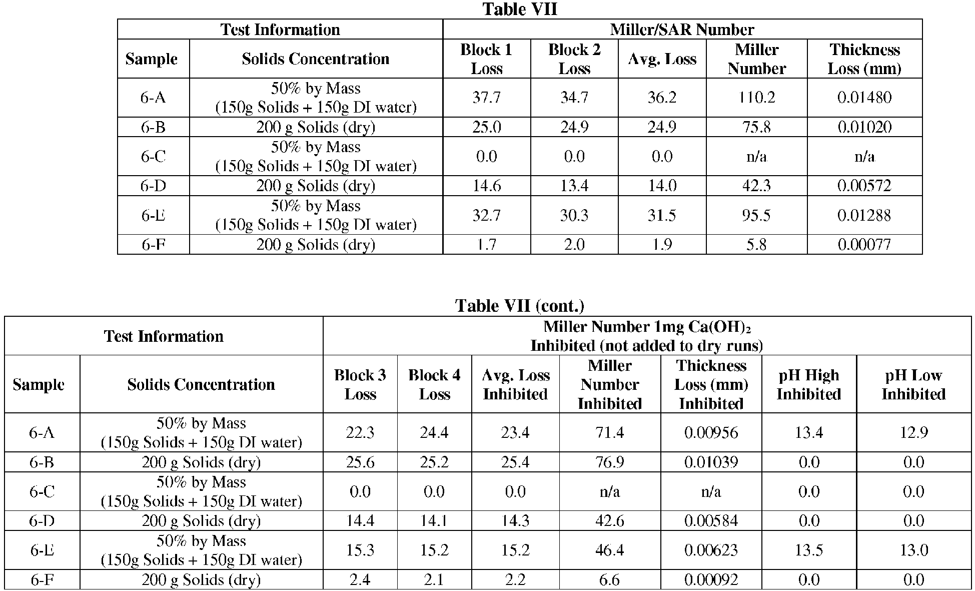

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification.

## Claims

1. A method of reducing erosion and wear on pumping and transfer equipment comprising:
at least partially coating a plurality of proppants with the coating composition comprising: a
resin-containing dispersion and one of a glycol and a cosolvent or a mixture thereof, suspending the plurality of proppants in a fracing fluid to produce a proppant slurry, and introducing the proppant slurry into an underground geologic formation through the pumping
and/or transfer equipment.

2. The method according to Claim 1, wherein the glycol is selected from the group consisting of ethylene glycol, propylene glycol, 1,3-butanediol, and 1,4-butanediol or a mixture of at least two thereof.

3. The method according to any of Claims 1 or 2, wherein the glycol comprises polypropylene glycol having a molecular weight of from 130 Da to 1000 Da.

4. The method according to any of Claims 1 to 3, wherein the cosolvent is selected from the group consisting of N-methyl-2-pyrrolidone, propylene carbonate, ethylene glycol monohexyl ether, diethylene glycol monomethyl ether, diethylene glycol monoethyl ether, diethylene glycol monopropyl ether, diethylene glycol monobutyl ether, ethylene glycol monobutyl ether acetate, diethylene glycol monoethyl ether acetate, and dipropylene glycol n-butyl ether, or a mixture of at least two thereof.

5. The method according to any of Claims 1 to 4, wherein the resin-containing dispersion is selected from the group consisting of polyurethane dispersions, blends containing polyurethane dispersions, acrylate dispersions and styrene butadiene rubber ("SBR") latex dispersions or a mixture of at least two thereof.

6. The method according to any of Claims 1 to 5, wherein the resin-containing dispersion comprises a polyurethane dispersion.

7. The method according to any of Claims 1 to 6, wherein the proppant slurry has a Miller number or SAR number as determined by ASTM G 75 of less than 50.

## Patentansprüche

1. Verfahren zur Verringerung von Erosion und Verschleiß an Pump- und Transfereinrichtungen, das Folgendes umfasst:
zumindest teilweises Beschichten von mehreren Stützmitteln mit der Beschichtungszusammensetzung, die eine harzhaltige Dispersion und ein Glykol oder ein Cosolvens oder eine Mischung davon umfasst,
Suspendieren der mehreren Stützmittel in einem Fracking-Fluid zur Herstellung einer Stützmittelaufschlämmung und
Eintragen der Stützmittelaufschlämmung in eine unterirdische geologische Formation durch die Pump- und/oder Transfereinrichtungen.

2. Verfahren nach Anspruch 1, wobei das Glykol aus der Gruppe bestehend aus Ethylenglykol, Propylenglykol, 1,3-Butandiol und 1,4-Butandiol oder einer Mischung von mindestens zwei davon ausgewählt ist.

3. Verfahren nach einem der Ansprüche 1 oder 2, wobei Glykol Polypropylenglykol mit einem Molekulargewicht von 130 Da bis 1000 Da umfasst.

4. Verfahren nach einem der Ansprüche 1 bis 3, wobei das Cosolvens aus der Gruppe bestehend aus N-Methyl-2-pyrrolidon, Propylencarbonat, Ethylenglykolmonohexylether, Diethylenglykolmonomethylether, Diethylenglykolmonoethylether, Diethylenglykolmonopropylether, Diethylenglykolmonobutylether, Ethylenglykolmonobutyletheracetat, Diethylenglykolmonoethyletheracetat und Dipropylenglykol-n-butylether oder einer Mischung von mindestens zwei davon ausgewählt ist.

5. Verfahren nach einem der Ansprüche 1 bis 4, wobei die harzhaltige Dispersion aus der Gruppe bestehend aus Polyurethan-Dispersionen, Polyurethan-Dispersionen enthaltenden Mischungen, Acrylat-Dispersionen und Styrol-Butadien-Kautschuk("SBR")-Latex-Dispersionen oder einer Mischung von mindestens zwei davon ausgewählt ist.

6. Verfahren nach einem der Ansprüche 1 bis 5, wobei die harzhaltige Dispersion eine Polyurethan-Dispersion umfasst.

7. Verfahren nach einem der Ansprüche 1 bis 6, wobei die Stützmittelaufschlämmung eine gemäß ASTM G 75 bestimmte Miller-Zahl oder SAR-Zahl von weniger als 50 aufweist.

## Revendications

1. Procédé de réduction de l'érosion et de l'usure sur un équipement de pompage et de transfert comprenant :
le revêtement au moins partiel d'une pluralité d'agents de soutènement avec la composition de revêtement comprenant : une dispersion contenant une résine et l'un parmi un glycol et un cosolvant ou un mélange de ceux-ci,
la suspension de la pluralité d'agents de soutènement dans un fluide de fracturation pour produire une suspension d'agent de soutènement, et
l'introduction de la suspension d'agent de soutènement dans une formation géologique souterraine par l'intermédiaire de l'équipement de pompage et/ou de transfert.

2. Procédé selon la revendication 1, le glycol étant choisi dans le groupe constitué par l'éthylèneglycol, le propylèneglycol, le 1,3-butanediol, et le 1,4-butanediol ou un mélange d'au moins deux de ceux-ci.

3. Procédé selon l'une quelconque des revendications 1 et 2, le glycol comprenant un polypropylèneglycol possédant un poids moléculaire allant de 130 Da à 1 000 Da.

4. Procédé selon l'une quelconque des revendications 1 à 3, le cosolvant étant choisi dans le groupe constitué par la N-méthyl-2-pyrrolidone, le carbonate de propylène, l'éthylèneglycol monohexyléther, le diéthylèneglycol monométhyléther, le diéthylèneglycol monoéthyléther, le diéthylèneglycol monopropyléther, le diéthylèneglycol monobutyléther, l'acétate d'éthylèneglycol monobutyléther, l'acétate de diéthylèneglycol monoéthylether, et le dipropylèneglycol n-butyléther, ou un mélange d'au moins deux de ceux-ci.

5. Procédé selon l'une quelconque des revendications 1 à 4, la dispersion contenant une résine étant choisie dans le groupe constitué par les dispersions de polyuréthane, les mélanges contenant des dispersions de polyuréthane, les dispersions d'acrylate et les dispersions de latex de caoutchouc styrène butadiène (« CSB ») ou un mélange d'au moins deux de ceux-ci.

6. Procédé selon l'une quelconque des revendications 1 à 5, la dispersion contenant une résine comprenant une dispersion de polyuréthane.

7. Procédé selon l'une quelconque des revendications 1 à 6, la dispersion d'agent de soutènement possédant un indice de Miller ou un indice SAR, tel que déterminé selon la norme ASTM G 75, de moins de 50.
